# EUROPÄISCHE PATENTANMELDUNG

(11) **EP 3 629 172 A1**
(43) Veröffentlichungstag der Anmeldung: **01.04.2020**
(21) Anmeldenummer: 18196837.1
(22) Anmeldetag: 26.09.2018
(51) Int. Cl.: G06F 9/54

(54) **VERFAHREN UND ANORDNUNG ZUM ZUGRIFF EINER ANWENDUNG EINES INDUSTRIELLEN BEDIEN- UND BEOBACHTUNGSGERÄTES AUF ZUMINDEST EINEN DIENST**

(71) Anmelder: Siemens Aktiengesellschaft, 80333 München (DE)
(72) Erfinder: Herberth, Harald, 90522 Oberasbach (DE); Strobel, Holger, 90556 Steinbach (DE)

(57) **Zusammenfassung**

Die Erfindung betrifft ein Verfahren und eine Anordnung zum Zugriff einer Anwendung (HMI-A) eines industriellen Bedien- und Beobachtungsgerätes auf zumindest einen Dienst, wobei das industrielle Bedien- und Beobachtungsgerät mittels einer proprietären industriellen Kommunikationsverbindung an eine Kommunikations-Infrastruktur (HMI-I) angebunden und darüber mit einem HMI-Server (HMI-S) verbunden wird. Dabei wird der HMI-Server (HMI-S) mit einem Message Broker (BR) ausgestattet, wobei der Message Broker (BR) zur Kommunikation mit dem zumindest einen Dienst mittels einer Anzahl offener Nachrichten-Protokolle eingerichtet wird, wobei Nachrichten und Dienste-Anforderungen der Anwendung (HMI-A) gemäß eines ersten offenen Nachrichten-Protokolls über die proprietäre industrielle Kommunikationsverbindung mit dem Message Broker (BR) ausgetauscht werden, wobei der Message Broker (BR) erforderlichenfalls eine Umsetzung der Nachrichten und Dienste-Anforderungen zwischen dem ersten offenen Nachrichten-Protokoll und einem von dem Dienst verwendeten zweiten offenen Nachrichten-Protokoll vornimmt, und wobei der Message Broker (BR) eine Weiterleitung der umgesetzten Nachrichten und Dienste-Anforderungen der Anwendung zu dem Dienst und umgekehrt vornimmt. Damit ist es möglich, dass Anwender ihre Dienste mit ihrer Umgebung mit den ihnen bekannten Mechanismen implementieren und an das HMI-System anbinden können. Außerdem ist es möglich, dass Dienste des HMI/SCADA System über Broker zum Zwecke der externen Verwendung zur Verfügung gestellt werden und von den Clienten mit den bekannten und verfügbaren Mechanismen Message-basierter Dienste konsumiert werden.

## Beschreibung

Die Erfindung betrifft ein Verfahren zum Zugriff einer Anwendung eines industriellen Bedien- und Beobachtungsgerätes auf zumindest einen Dienst gemäß dem Oberbegriff des Patentanspruchs 1, und einen Message Broker zum Zugriff einer Anwendung eines industriellen Bedien- und Beobachtungsgerätes auf zumindest einen Dienst gemäß dem Oberbegriff des Patentanspruchs 8.

Eine Lösung zum Bedienen und Beobachten in der Industrieautomatisierung (HMI System) stellt dem Anwender Möglichkeiten zur Verfügung, wie dieser Anwendungsoberflächen als Bedienbilder - sogenannte HMI Screens - projektieren kann. In diesen HMI Screens werden Ein-/Ausgabe-Elemente definiert (z.B. Balkenanzeige oder Rundzeigerinstrument) und deren Werteversorgung (Abbildung auf Sensoren bzw. Aktoren) bzw. Verhalten definiert. Dabei legt das HMI-System fest, über welche Elemente und Möglichkeiten der Anwender dabei verfügt.

Weiterhin erlaubt ein HMI/SCADA System dem Anwender die Anbindung bzw. Integration eigener Anwendungen mit dem HMI/SCADA System, um dieses mit eigener - meist sehr spezifischer - Funktionalität zu ergänzen. Typische Anwendungen, die ein Anwender zusätzlich in das HMI/SCADA System einbringen möchte, betreffen beispielsweise die Anbindung von Daten von speziellen Geräten an den Datenhaushalt (Tags) des HMI/SCADA Systems, Anbindung von Sensoren und Aktoren (z.B. Temperatursensoren, Waagen, Hand-Scanner (Barcode / QR-Code)), Kamerasystemen (z.B. Erkennung von Gut-/Schlecht-Bedingungen, Beobachten an schwer zugängigen Orten (z.B. abgeschirmter Gefahrenbereich od. Schutzgas)), Anbindung spezieller Geräte und deren Dienste, z.B. Barcode-Drucker, Label-Drucker, 3D Drucker und 3D Scanner, Dienste zum Zugriff auf (Web-)Datenbanken (Rezepturen, Qualitäten von Eingangsstoffen, Wetter- und Klima-Dienste), Integration mit überlagerten Systeme (MES, ERP, Arbeitsvorbereitung, Materialwirtschaft, ...), sowie Durchführung von Statistik und Data Analytics zum Auswerten von HMI/SCADA Daten, insbesondere unter Verwendung von Standard-Programmpaketen wie SPPS, Microsoft Excel, Matlab, Maple, R, NumPy, SciPy. Weitere Anwendungen betreffen die Anbindung von Artificial Intelligence ("künstlicher Intelligenz") wie Machine- und Deep-Learning, unter Verwendung von Standard Programmpaketen, wie TensorFlow, Theano, ...

Die Integration soll so erfolgen, dass die eigenen Daten wo sinnvoll mit dem HMI/SCADA Datenhaushalt (Tags, Alarme) verbunden werden. Wesentlich ist die Verwendung eigener Dienste aus dem HMI/SCADA System (GUI front-end im Browser, Custom-Control, HMI-Script) mit den vorhandenen Mitteln (insbesondere Scripting) desselben.

Bei der Integration ist wesentlich zu betrachten, dass viele dieser Anwendungen schon fertig vorliegen (bereits entwickelt oder von Dritten zugekauft) und der Anwender diese gar nicht anpassen kann. Bei einer Integration ist es sehr vorteilhaft, die Schnittstellen des HMI/SCADA Systems in denjenigen Technologien zu verwenden, die möglichst gut in die Entwicklungsumgebung des Anwenders passen. Eine feste Vorgabe durch das HMI/SCADA System von z.B. Programmiersprache, Compiler-Versionen, Versionen des .NET Frameworks, oder im Allgemeinen Bibliotheken aller Art, ist aus Sicht des Anwenders ggf. eine hohe, manchmal sogar unüberwindbare Hürde. Daher muss der Anwender u.a. die Programmiersprache passend zu seiner Umgebung (Ecosystem) wählen können. Insbesondere darf sich das Verhalten seiner Anwendung nach einer Integration mit dem HMI/SCADA System nicht unvorteilhaft verändern, ebengerade in kritischen Qualitäten wie Speicherbedarf, Laufzeitverhalten und vor allem Stabilität.

Die klassische Lösung erfolgt mit Hilfe der Nutzung eines - durch das HMI/SCADA System definierten - Interfaces, kurz auch API (Application Programming Interface) oder ODK (Open Development Kit) genannt.

Das API bietet in der Regel ein sehr systemnahes Interface, was einschließlich der Aufrufmethodik (Programmiermodell, z.B. asynchron, bulk-interfaces) erst mit erheblichem Aufwand erlernt werden muss. Dies ist nur von erfahrenen System-Programmierern in intensiver Beschäftigung und Schulung zu leisten. Durch Verwendung des API und seiner Bibliotheken wird zudem eine erhebliche Menge an Code (sowohl vom Hersteller der SCADA/HMI-Plattform, als auch Bibliotheken von anderen Anbietern) mit vielen Threads und Synchronisationsmitteln in der Ausführeinheit (Prozess) der eigenen Anwendung nötig. Darüber hinaus sind durch das API zahlreiche Aspekte fest vorgegeben, insbesondere das Programmiermodell (synchron, asynchron, Message-basiert), die Programmiersprache (zB C, C#, Java), die Programmierumgebung ("Ecosystem", z.B..NET, Java, Web), die Werkzeuge (Toolchain), konkrete Versionen (z.B..NET 4.5 und VisualStudio 12) und Rückwirkungen auf den eigenen Prozess (z.B. Speichergröße, Threadzahl, Abhängigkeiten zu Libraries).

Das Vorgenannte stellt oft eine erhebliche bis unüberwindbare Hürde für den Anwender dar. Zum einen muss er sich ggf. nicht nur in das konkrete API, sondern auch in die vorgenannten Aspekte neu Einarbeiten, und zum anderen passen diese oft nicht zu seiner Problemstellung oder auch seiner vorhandenen Infrastruktur bzw. Anwendung. Letztere kann er aus vielfältigen Gründen oft nicht Anpassen, beispielsweise, weil diese nur zugekauft ist, eine Anbindung nur in inkompatibler Technologie möglich ist, kein Know-How vorhanden bzw. nicht mehr vorhanden ist, oder die Infrastruktur auf alter Technologie (zB Visual Basic, Fortran, Cobol) basiert. Eine Anpassung wäre damit aufwändig, das heißt, die o.g. Aufwände sind nicht wirtschaftlich.

Es ist also eine Aufgabe der vorliegenden Erfindung, den Zugriff oder die Anbindung einer HMI-Anwendung an externe Daten und Dienste zu vereinfachen.

Es ist eine Kernidee der erfindungsgemäßen Lösung dieser Aufgabe, dass das HMI/SCADA System einen Message Broker, auch als "OpenBroker" oder "Nachrichtenbroker" bezeichnet, als universellen Broker oder "Vermittler" zur Verfügung stellt. Der zentrale Vorteil einer message-orientierten Interaktion ist, dass sich Sender und Empfänger nur über Syntax und Semantik des Message Inhaltes verständigen müssen. Der Message Broker wiederum kümmert sich um eine zielgerichtete Weiterleitung der Nachrichten vom Sender zum Empfänger. Entscheidend dabei ist, dass sich Sender und Empfänger nicht kennen müssen. Der Empfänger muss lediglich die Adresse der Information (auch "topic" genannt) kennen. Der Sender stellt die Information unter dieser Adresse bereit. Weiter müssen beide Kommunikationspartner die Adresse des Brokers sowie den Weg und die Kommunikationsprotokolle zu diesem kennen. Letzteres kann (muss aber nicht) für Sender und Empfänger sogar unterschiedlich sein; in diesem Fall findet also durch den Message Broker eine Protokollumsetzung statt.

Semantisch stellen die Broker zwei Interaktions-Muster zur Verfügung.

In einem ersten Interaktions-Muster "Publish/Subscribe" (P/S) wird durch den Publisher (Anbieter einer Information) deklariert, welche Information unter welcher Adresse zur Verfügung gestellt (published) wird. Die Adresse wird typisch als "topic" bezeichnet. Immer dann, wenn der Publisher neue Informationen hat, benachrichtigt er den Broker. Dieser wiederum verteilt die Information dann an alle Interessierten (Subscriber), welche sich für diese Information interessieren. Selbstredend haben diese (Subscriber) vorher beim Broker ihr Interesse an dieser Information (topic) angemeldet.

In einem zweiten Interaktions-Muster "Remote Procedure Call" (RPC) wird durch einen Anbieter (Callee) eine Dienstleistung bereit gestellt, die durch einen Aufrufer (Caller) genutzt werden kann (z.B. addiere zwei Werte (add(a,b)). Eine Dienstleitung wird ebenfalls durch eine Adresse identifiziert (topic). Der zentrale Unterschied zu Publish/Subscribe ist, das hier zum Ersten die Aufrufargumente (a, b) mittels des Brokers vom Caller zum Callee zu transportieren sind, und dass zum Zweiten das Ergebnis der Dienstleistung entsprechend zurück vermittelt wird (result = add(a, b)) .

Der Message Broker "OpenBroker" stellt erfindungsgemäß innerhalb des HMI / SCADA Systems einen P/S und RPC Broker zur Verfügung. Darüber können Anwendungen Informationen austauschen und Dienste anbieten, wie auch konsumieren. Die Broker bieten gleichzeitig mehrere Protokolle an (z.B. WAMP, MQTT, STOMP, zeilenorientiert), um Anwendungen in ihrem bevorzugten Modell zu unterstützen. Das HMI/SCADA System stellt Teile seiner Dienste (z.B. "Tags" (HMI-Variablen) lesen und schreiben, Alarme lesen und quittieren, etc.) ebenfalls über den Broker zur Verfügung. Damit kann aus beliebigen Applikationen mit dem HMI/SCADA System interagiert werden. Des Weiteren kann der Anwender aus integralen Script-Artefakten des HMI/SCADA Systems und insbesondere aus einer HMI-Anwendung heraus auf externe P/S oder RPC Dienste zugreifen, und umgekehrt.

Die Aufgabe wird insbesondere durch das Verfahren gemäß Patentanspruch 1 und durch die Einrichtung nach Patentanspruch 8 gelöst.

Dabei ist ein Verfahren zum Zugriff einer Anwendung (HMI-A) eines industriellen Bedien- und Beobachtungsgerätes auf zumindest einen Dienst vorgesehen, wobei das industrielle Bedien- und Beobachtungsgerät mittels einer proprietären industriellen Kommunikationsverbindung an eine Kommunikations-Infrastruktur (HMI-I) angebunden und darüber mit einem HMI-Server verbunden wird. Dabei wird der HMI-Server mit einem Message Broker ausgestattet, wobei der Message Broker zur Kommunikation mit dem zumindest einen Dienst mittels einer Anzahl offener Nachrichten-Protokolle eingerichtet wird, wobei Nachrichten und Dienste-Anforderungen der Anwendung (HMI-A) gemäß eines ersten offenen Nachrichten-Protokolls über die proprietäre industrielle Kommunikationsverbindung mit dem Message Broker ausgetauscht werden, wobei der Message Broker erforderlichenfalls eine Umsetzung der Nachrichten und Dienste-Anforderungen zwischen dem ersten offenen Nachrichten-Protokoll und einem von dem Dienst verwendeten zweiten offenen Nachrichten-Protokoll vornimmt, und wobei der Message Broker eine Weiterleitung der umgesetzten Nachrichten und Dienste-Anforderungen der Anwendung zu dem Dienst und umgekehrt vornimmt. Damit ist es möglich, dass Anwender ihre Dienste mit ihrer Umgebung mit den ihnen bekannten Mechanismen implementieren und an das HMI-System anbinden können. Außerdem ist es möglich, dass Dienste des HMI/SCADA System über Broker zum Zwecke der externen Verwendung zur Verfügung gestellt werden und von den Clienten mit den bekannten und verfügbaren Mechanismen Message-basierter Dienste konsumiert werden.

Die Aufgabe wird außerdem durch einen Message Broker zum Zugriff einer Anwendung (HMI-A) eines industriellen Bedien- und Beobachtungsgerätes auf zumindest einen Dienst gelöst, wobei das industrielle Bedien- und Beobachtungsgerät mittels einer proprietären industriellen Kommunikationsverbindung an eine Kommunikations-Infrastruktur (HMI-I) angebunden und darüber mit einem HMI-Server verbunden ist. Dabei ist der HMI-Server mit dem Message Broker ausgestattet, wobei der Message Broker zur Kommunikation mit dem zumindest einen Dienst mittels einer Anzahl offener Nachrichten-Protokolle eingerichtet ist, wobei vorgesehen ist, dass Nachrichten und Dienste-Anforderungen der Anwendung (HMI-A) gemäß eines ersten offenen Nachrichten-Protokolls über die proprietäre industriellen Kommunikationsverbindung mit dem Message Broker ausgetauscht werden, wobei der Message Broker zur Umsetzung der Nachrichten und Dienste-Anforderungen zwischen dem ersten offenen Nachrichten-Protokoll und einem von dem Dienst verwendeten zweiten offenen Nachrichten-Protokoll im Falle unterschiedlicher Protokolle eingerichtet ist, und wobei der Message Broker zur Weiterleitung der umgesetzten Nachrichten und Dienste-Anforderungen der Anwendung zu dem Dienst und umgekehrt ausgestaltet ist. Mittels dieser Einrichtung können die bereits anhand des Verfahrens diskutierten Vorteile erzielt werden.

Vorteilhafte Ausgestaltungen der Erfindung sind in den abhängigen Patentansprüchen angegeben. Sie gelten gleichermaßen für das erfindungsgemäße Verfahren und für das erfindungsgemäße System. Die verschiedenen vorteilhaften Ausgestaltungen können miteinander kombiniert werden.

Vorteilhaft vermittelt der Message Broker ein Publish-Subscribe Protokoll oder ein Remote-Procedure-Call Protokoll, wobei in einer besonders vorteilhaften Variante beide Protokolle einsetzbar sind. In einer vorteilhaften Variante kann der Message Broker sowohl mehrere Clients, also beispielsweise HMI-Anwendungen oder HMI-"Artefakte" bedienen, als auch mehrere Dienste, Dienste-Server auf der anderen Seite. In einem solchen Fall können auch mehrerer verschiedene Protokolle und Sitzungen ("sessions") gleichzeitig abgewickelt werden. Auch ein sog. "Multiplexing" zum Zugriff eines Clients auf mehrere Dienste und umgekehrt mehrerer Clients auf ein- und denselben Dienst ist möglich. Dabei kann der Begriff "Dienst" vorteilhaft sowohl eine Datenquelle bzw. -senke, insbesondere bei Verwendung eines Publish-Subscribe-Mechanismus', als auch ein Dienst im Sinne eines RPC-Mechanismus (Remote Procedure Call) sein. Ein Dienst in diesem Sinne kann also ein beliebiges externes, Daten liefernde oder konsumierendes Gerät sein, beispielsweise eine Kamera, ein Scanner, ein RFID-Reader oder dergleichen.

Vorteilhaft werden über den Message Broker interne Daten, insbesondere Prozesswerte, einer industriellen Komponente, die über das Bedien- und Beobachtungsgerät gesteuert wird, dem Dienst zur Verfügung gestellt. Dies bedeutet, dass nicht nur HMI-Anwendungen mit ("externen") Daten versorgt werden können, sondern auch aus dem HMI-Gerät (Bedien- und Beobachtungsgerät) und insbesondere auch aus dem HMI-Server heraus Daten (Sensorwerte, Prozeßwerte etc.) an einen externen Dienst (das kann auch eine externe Anwendung sein, z.B. ein MES-System) zur Verfügung gestellt werden und umgekehrt Befehle oder Daten aus einem solchen externen System an die Automatisierungsanlage, insbesondere das HMI-Gerät und den HMI-Server, zurück übermittelt werden können. Über den Message Broker kann also entweder lesender oder schreibender oder gemischt lesender und schreibender Zugriff auf interne Daten des Bedien- und Beobachtungsgerätes bzw. der HMI-Anwendung, z.B. sog. "Tags", aber auch andere Daten, gewährleistet werden. Alternativ oder zusätzlich bietet der Message Broker auf dieselbe Art und Weise auch Zugriff auf den Datenhaushalt des HMI-Servers. Die Zugriffsrechte und Zugriffsart (read only, write) können feingranular im Message Broker eingestellt werden, vorzugsweise bei der Registrierung von Daten und Diensten. In einer vorteilhaften Variante wird der Message Broker dann mit einer Filter- oder Firewall-Funktionalität ausgerüstet, womit Zugriffe und aufrufbare Funktionen kontrolliert werden können.

Für die Adressierung von mit den Nachrichten angeforderten bzw. übertragenen Daten und Dienstanforderungen, die mittels des Message Brokers vermittelt werden, werden vorteilhaft textbasierte Kennungen, sog. "topics", verwendet.

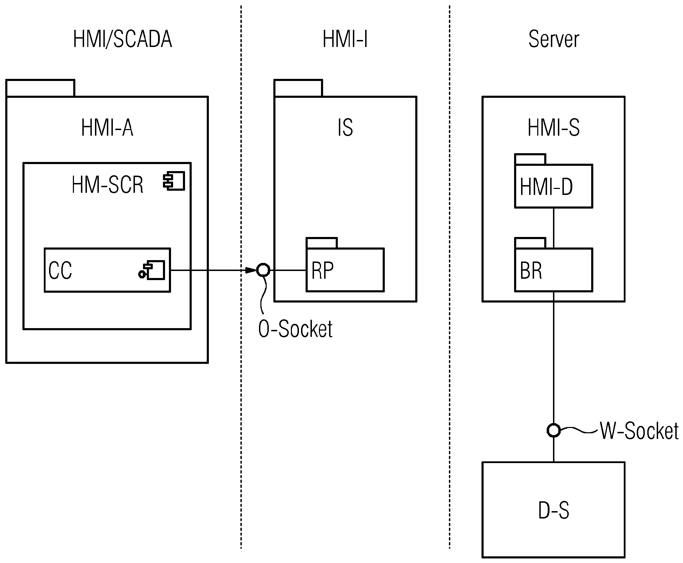

Ein Ausführungsbeispiel des erfindungsgemäßen Verfahrens und einer erfindungsgemäßen Anordnung wird nachfolgend anhand der Zeichnung erläutert.

Dabei zeigt die schematische Figur drei logische Ebenen der Kommunikation mit den entsprechenden logischen Kommunikationsverbindungen und den jeweils in den Ebenen angeordneten Geräten und Einrichtungen.

In der Figur ist im linken Teil ein Bedien- und Beobachtungsgerät mit einer Anwendung HMI-A ("HMI-Anwendung") gezeigt, wobei die Anwendung ein Bedienbild HMI-SCR ("HMI-screen") umfasst. Das Bedienbild umfasst beispielhaft ein Objekt CC ("Custom-Control"), das zur Kommunikation durch Zugriff auf einen Web-Socket eingerichtet ist, also gemäß einem Internet-Protokoll seine Kommunikation adressiert und abwickelt.

Selbstverständlich können diese und auch die nachfolgend eingeführten Einrichtungen in einer realen Anordnung in vielfältiger Anzahl und verschiedener Ausführung auftreten, ohne vom hier gezeigten Konzept abzuweichen.

Im mittleren Teil der Figur ist die Ebene der Kommunikations-Infrastruktur HMI-I gezeigt, wobei diese Ebene neben einem Kommunikations-Server IS mit einem Web-Server hier also auch verschiedene andere Komponenten wie Switche, Router und dergleichen umfasst. In dieser Schicht sind neben der Kommunikation auch verschiedene andere Dienste und Protokolle realisiert, z.B. Security (Sicherheit), Redundanz etc. In dieser Schicht werden industrielle Transportnetze verwendet, z.B. PROFInet oder TCP/IP, mit denen auch proprietäre Kommunikationsprotokolle gefahren werden, die die oben genannten Dienste wie Security, Redundancy etc. nutzen.

Im rechten Teil der Figur ist die Ebene der Server gezeigt, wobei hier insbesondere HMI- und/oder SCADA Server HMI-S angeordnet sind, die unter anderem die Daten für die Anwendung HMI-A bereitstellen und daneben auch Funktionen für eine Produktionsüberwachung und -steuerung etc. aufweisen oder solchen Daten bereitstellen. Dieser oder ein gleichgelagerter Server umfasst auch eine HMI-Diensteeinheit HMI-D, die Zugriff auf Prozessdaten und Automatisierungsdaten hat, also beispielsweise Sensor- und Aktorwerte bzw. deren zugehörigen Systemvariablen ("Tags"), und diese in einer vorteilhaften Ausgestaltung externen Einheiten lesend und schreibend zur Verfügung stellen kann. Der gezeigte Server HMI-S ist mittels proprietärer Kommunikation an die Infrastruktur HM-I angebunden. Andererseits ist der Server HMI-S auch kommunikativ mit zumindest einem externen Server, dem Dienste-Server D-S, verbunden, auf dem unterschiedliche Dienste laufen können. Ein solcher Dienst kann beispielsweise ein Server zur Bereitstellung einer Information sein, die auf einem "Control" CC der HMI-Anwendung HMI-A angezeigt werden soll, oder ein Dienst zur Durchführung einer Kalkulation, oder auch ein Daten konsumierender Dienst, der Daten aus dem Automatisierungssystem benötigt für Auswertungen, Statistiken oder dergleichen.

Im Server IS ist ein Reverse-Proxyserver RP angeordnet, der der Anwendung HMI-A ein Web- Interface O-Socket ("Open Socket") bereitstellt, wobei die Zugriffe und der Datenverkehrt des Objektes CC auf dieses Web- Interface innerhalb der industriellen Kommunikation transportiert werden. Dabei steht der Reverse-Proxyserver RP und dessen Web- Interface selbstverständlich einer Vielzahl von HMI-Geräten und -Anwendungen zur Verfügung (nicht dargestellt).

Während jedes "Control" CC eine einzelne Verbindung zum Web-Interface O-Socket unterhält, bündelt und ggf. re-adressiert der Reverse-Proxyserver RP diese Requests mit anderer Kommunikation in der proprietären Kommunikation und leitet diese an den HMI-Server HMI-S weiter. Der Message Broker BR wertet die Requests erforderlichenfalls aus und adressiert sie, ggf. mittels eines abweichenden Protokolls, an das Ziel, den Dienst-Server D-S mit dem adressierten Dienst, weiter. Mit anderen Worten: Der Message Broker BR vermittelt zwischen dem Control CC und einem Dienst des Dienst-Servers D-S den Austausch von Daten oder die Nutzung eines Dienstes und nimmt erforderlichenfalls eine Protokollumsetzung vor.

Zusätzlich oder anstelle des Controls CC der HMI-Anwendung HMI-A kann über den Message Broker BR auch ein Datenaustausch zwischen dem Server HMI-S selbst bzw. dessen Datenhaushalt mit dem externen Dienst-Server D-S oder einer anderen Entität, beispielsweise einem Analyse-Rechner oder einem Protokollierungsrechner, vermittelt werden. Zum Datenhaushalt des Servers HMI-S gehören dabei auch Systemvariablen (z.B. "Tags") anderer Geräte wie zum Beispiel Speicherprogrammierbarer Steuerungen, Alarmserver, Gateways etc. Neben den eigentlichen Daten, z.B. Sensorwerte, können auch Aktoren der Steuerungen oder dergleichen zugreifbar gemacht werden. Da die Adressierung über den Message Broker BR anhand frei definierbarer Begriffe, sog. "topics", erfolgt, können systemweit eindeutige und semantisch sinnvolle Begriffe zur Adressierung verwendet werden. Dadurch, dass eine Komponente wie z.B. die Instanz HMI-D oder die Anwendung HMI-A selbst einzelne Daten bzw. Variablen oder "Tags" jeweils beim Message Broker BR registrieren, ist eine feingranulare Zugriffssteuerung möglich.

Zusammengefasst können Anwender mit dem geschilderten Verfahren bzw. den geschilderten Einrichtungen der Anordnung, insbesondere durch den Message Broker BR, ihre Dienste mit ihrer Umgebung mit den ihnen bekannten Mechanismen implementieren, insbesondere unter Nutzung der eigenen System- und Programmierumgebung, einer freien Wahl der Programmiersprache (polyglott) und -umgebung (ecosystem), unter Verwendung bekannter und etablierter Kommunikationswege (Streams, WebSockets, ...) und Bibliotheken (WebSockets, MQTT, WAMP, ...), einem ihnen geläufigen Buildsystem (Make) und Entwicklungs-Oberfläche (IDE = Integrated Development Environment, zB Eclipse, Microsoft Visual Studio). Daraus ergibt sich ein geringerer ArbeitsAufwand und keine kurze Entwicklungszeit (time-to-market), was ebenso durch Nutzung vorhandener Bibliotheken für fast jede Sprache und Umgebung und durch Verwendung des einfachen und bekannten oder leicht erlernbaren Architektur-Musters eines Message Brokers unterstützt wird.

Weitere Vorteile sind eine geringe Rückwirkung auf die Programmstruktur und -Logik der beim Anwender vorhandenen Applikationen. Dienste (Services) können mit dem HMI/SCADA System (auf dessen Sever Rechner == back-end) registriert werden, wobei auch die Kommunikation und das Startverhalten definiert werden können. Das HMI/SCADA System startet (und stoppt) den Dienst auf Wunsch mit zeilenbasiertem Stream auf stdin/stdout beim Hochlauf oder erst bei Bedarf. Das HMI/SCADA System verbindet sich mit dem Dienst mit zeilenorientiertem Stream über eine named pipe beim Hochlauf oder erst bei Bedarf. Dabei stellt das HMI/SCADA System einen Endpunkt bereit, auf den sich ein - bezüglich des Startverhaltens unabhängiger Dienst - verbindet. Dabei kann das Transport- und das Kommunikationsprotokoll aus einer Vielzahl von Möglichkeiten gewählt werden, z.B. named pipe, sockets, WebSockets. Für die Kommunikation über den Message Broker können dann unterschiedliche Protokolle eingesetzt werden, z.B. Message-orientiert (STOMP, MQTT, AMQP, ...), WAMP, oder sogar weitergehende Implementierungen, die mehr Komfort für den Nutzer anbieten.

Dazu gehört beispielsweise die Implementierung des Object Models der HMI/SCADA Systems (HMI-Runtime), z.B. in JavaScript, .NET, evtl. auch in C++ e.al. Grundsätzlich ist es möglich, einen eigenen Dienst als Callee od. Publisher anzubieten, zur Verwendung quer durch das System.

Die Dienste können an den wesentlichen Stellen innerhalb des HMI/SCADA Systems verwendet werden, z.B. aus einem WebCustomControl (damit typisch aus einem Browser == front-end). Dies ermöglicht dem Anwender das höchste Maß an flexibler Integration, er kann hier sowohl im front-end seine Visualisierung einbringen (WebCustomControl), die vorhandene Funktionalität des SCADA/HMI Systems nutzen, wie auch eigene Dienste im back-end (am SCADA/HMI Server) hinzufügen und aus dem front-end nutzen. Über ein HMI-GUI Script im HMI User-Interface-Server (als Teil der im HMI/SCADA standardmäßig angebotenen Skript-Fähigkeiten) oder aus einem HMI-global Script im globalen HMI Server (als Teil des HMI/SCADA Standard-Umfangs) können Dienste des HMI/SCADA System über den Message Broker zum Zwecke der externen Verwendung zur Verfügung gestellt werden und von den Clienten mit den bekannten und verfügbaren Mechanismen message-basierter Dienste konsumiert werden.

Für die Datensicherheit (Security) erfolgt die Kommunikation aus Client-Sicht (front-end) mit dem Broker gesichert innerhalb der HMI/SCADA Kommunikation. Eine Auswertung (Authentifizierung) des angemeldeten Benutzers ist möglich, damit ist auch ein Access Control innerhalb des HMI/SCADA Systems möglich. Die Datensicherheit (Security) aus Server-Sicht ist ebenso gegeben. Ein eigener offener diensterbringender Service kann mit den HMI Servern kollokiert betrieben werden, dadurch muss der Weg vom Service zum Broker nicht zusätzlich abgesichert werden, da diese Kommunikation innerhalb des geschlossenen HMI/SCADA Server Systems läuft.

## Patentansprüche

1. Verfahren zum Zugriff einer Anwendung (HMI-A) eines industriellen Bedien- und Beobachtungsgerätes auf zumindest einen Dienst,
wobei das industrielle Bedien- und Beobachtungsgerät mittels einer proprietären industriellen Kommunikationsverbindung an eine Kommunikations-Infrastruktur (HMI-I) angebunden und darüber mit einem HMI-Server (HMI-S) verbunden wird,
**dadurch gekennzeichnet**,
der HMI-Server (HMI-S) mit einem Message Broker (BR) ausgestattet wird,
dass der Message Broker (BR) zur Kommunikation mit dem zumindest einen Dienst mittels einer Anzahl offener Nachrichten-Protokolle eingerichtet wird,
dass Nachrichten und Dienste-Anforderungen der Anwendung (HMI-A) gemäß eines ersten offenen Nachrichten-Protokolls über die proprietäre industrielle Kommunikationsverbindung mit dem Message Broker (BR) ausgetauscht werden, dass der Message Broker (BR) erforderlichenfalls eine Umsetzung der Nachrichten und Dienste-Anforderungen zwischen dem ersten offenen Nachrichten-Protokoll und einem von dem Dienst verwendeten zweiten offenen Nachrichten-Protokoll vornimmt, und
dass der Message Broker (BR) eine Weiterleitung der umgesetzten Nachrichten und Dienste-Anforderungen der Anwendung zu dem Dienst und umgekehrt vornimmt.

2. Verfahren nach Patentanspruch 1,
**dadurch gekennzeichnet,**
**dass** der Message Broker (BR) ein Publish-Subscribe Protokoll vermittelt.

3. Verfahren nach einem der vorhergehenden Patentansprüche,
**dadurch gekennzeichnet,**
**dass** der Message Broker (BR) ein Remote-Procedure-Call Protokoll vermittelt.

4. Verfahren nach einem der vorhergehenden Patentansprüche,
**dadurch gekennzeichnet,**
**dass** über den Message Broker (BR) interne Daten, insbesondere Prozesswerte, einer industriellen Komponente, die über das Bedien- und Beobachtungsgerät gesteuert wird, dem Dienst zur Verfügung gestellt werden.

5. Verfahren nach Patentanspruch 4,
**dadurch gekennzeichnet,**
**dass** über den Message Broker (BR) lesender und/oder schreibender Zugriff des Dienstes auf die internen Daten erfolgt.

6. Verfahren nach einem der vorhergehenden Patentansprüche,
**dadurch gekennzeichnet,**
**dass** der Message Broker (BR) mit einer Filter- oder Firewall-Funktionalität ausgerüstet wird, womit Zugriffe und aufrufbare Funktionen kontrolliert werden.

7. Verfahren nach einem der vorhergehenden Patentansprüche,
**dadurch gekennzeichnet,**
**dass** die Adressierung von mit den Nachrichten angeforderten bzw. übertragenen Daten und Dienstanforderungen, die mittels des Message Brokers (BR) vermittelt werden, textbasierte Kennungen verwendet werden.

8. Message Broker (BR) zum Zugriff einer Anwendung (HMI-A) eines industriellen Bedien- und Beobachtungsgerätes auf zumindest einen Dienst,
wobei das industrielle Bedien- und Beobachtungsgerät mittels einer proprietären industriellen Kommunikationsverbindung an eine Kommunikations-Infrastruktur (HMI-I) angebunden und darüber mit einem HMI-Server (HMI-S) verbunden ist,
**dadurch gekennzeichnet**,
der der Message Broker (BR) auf dem HMI-Server (HMI-S) angeordnet ist,
dass der Message Broker (BR) zur Kommunikation mit dem zumindest einen Dienst mittels einer Anzahl offener Nachrichten-Protokolle eingerichtet ist,
dass vorgesehen ist, dass Nachrichten und Dienste-Anforderungen der Anwendung (HMI-A) gemäß eines ersten offenen Nachrichten-Protokolls über die proprietäre industriellen Kommunikationsverbindung mit dem Message Broker (BR) ausgetauscht werden,
dass der Message Broker (BR) erforderlichenfalls zur Umsetzung der Nachrichten und Dienste-Anforderungen zwischen dem ersten offenen Nachrichten-Protokoll und einem von dem Dienst verwendeten zweiten offenen Nachrichten-Protokoll eingerichtet ist, und
dass der Message Broker (BR) zur Weiterleitung der umgesetzten Nachrichten und Dienste-Anforderungen der Anwendung zu dem Dienst und umgekehrt ausgestaltet ist.

9. Message Broker (BR) nach Patentanspruch 8,
**dadurch gekennzeichnet,**
**dass** der Message Broker (BR) zur Vermittlung eines Publish-Subscribe Protokolls eingerichtet ist.

10. Message Broker (BR) nach einem der Patentansprüche 8-9,
**dadurch gekennzeichnet,**
**dass** der Message Broker (BR) zur Vermittlung eines Remote-Procedure-Call Protokolls eingerichtet ist.

11. Message Broker (BR) nach einem der Patentansprüche 8-10,
**dadurch gekennzeichnet,**
**dass** der Message Broker (BR) dazu eingerichtet ist, interne Daten, insbesondere Prozesswerte, einer industriellen Komponente, die über das Bedien- und Beobachtungsgerät gesteuert wird, dem Dienst zur Verfügung zu stellen.

12. Message Broker (BR) nach einem der Patentansprüche 8-11,
**dadurch gekennzeichnet,**
**dass** der Message Broker (BR) zur Vermittlung eines lesenden und/oder schreibenden Zugriff des Dienstes auf die internen Daten eingerichtet ist.

13. Message Broker (BR) nach einem der Patentansprüche 8-12,
**dadurch gekennzeichnet,**
**dass** der Message Broker (BR) mit einer Filter- oder Firewall-Funktionalität zur Kontrolle von Zugriffen und aufrufbaren Funktionen ausgerüstet ist.

14. Message Broker (BR) nach einem der Patentansprüche 8-13,
**dadurch gekennzeichnet,**
**dass** zur Adressierung von mit den Nachrichten angeforderten bzw. übertragenen Daten und Dienstanforderungen, die mittels des Message Brokers (BR) vermittelt werden, textbasierte Kennungen vorgesehen sind.
